(19) **Europäisches Patentamt**
**European Patent Office**
**Office européen des brevets**

(11) Veröffentlichungsnummer: **0 504 622 A1**

(12) **EUROPÄISCHE PATENTANMELDUNG**

(21) Anmeldenummer: **92103047.4**

(22) Anmeldetag: **24.02.92**

(51) Int. Cl.⁵: **C01B 7/07**

(30) Priorität: **28.02.91 DE 4106373**

(43) Veröffentlichungstag der Anmeldung:
**23.09.92 Patentblatt 92/39**

(84) Benannte Vertragsstaaten:
**AT BE CH DE FR GB LI NL**

(71) Anmelder: **L. & C. Steinmüller GmbH**
**Postfach 10 08 55/10 08 65 Fabrikstrasse 1**
**W-5270 Gummersbach 1(DE)**

(72) Erfinder: **Kuciel, Eugeniusz, Dr.**
**Graf Albert Strasse 67**
**W-5277 Marienheide(DE)**
Erfinder: **Holste, Reinhard**
**Kleinenbernberger Strasse 19**
**W-5270 Gummersbach 2(DE)**
Erfinder: **Kubisa, Ryszard, Dr.**
**Gustav-Adolf-Strasse 1**
**W-5270 Gummersbach 31(DE)**

(74) Vertreter: **Carstens, Wilhelm, Dipl.-Phys.**
**L. & C. Steinmüller GmbH Patentabteilung**
**Postfach 10 08 55/10 08 65**
**W-5270 Gummersbach 1(DE)**

(54) **Verfahren zur Herstellung einer höher konzentrierten Salzsäure aus einer Salzsäure mit einer unterhalb der azeotropen Konzentration liegenden Konzentration.**

(57) Bei einem Verfahren zur Herstellung einer höher konzentrierten Salzsäure aus einer Salzsäure mit einer unterhalb der azeotropen Konzentration liegenden Konzentration, insbesondere aus der Waschflüssigkeit einer Wäsche eines zumindest HCl-haltigen Abgases, insbesondere des Abgases einer Müllverbrennungsanlage, ist zur Herstellung von höher konzentrierter Säure auf einfache Weise und unter Austreibung von HCl aus flüssiger Phase vorgesehen, daß aus der Ausgangssäure (1) in einer ersten Stufe (2) durch Energiezufuhr (3;5) Wasser (5) ausgetrieben wird, daß in einer zweiten Stufe (4) mit einem Kreislauf (K1) einer auf Siedetemperatur erwärmten wässrigen $CaCl_2$-Lösung Wasser und HCl ausgetrieben wird und der Abdampf (3) der zweiten Stufe (4) der ersten Stufe als Heizdampf zugeführt wird, daß aus der ersten Stufe (2) abgezogene aufkonzentrierte Salzsäure (9) und aus dem Kreislauf (K1) der zweiten Stufe (4) abgezogene calciumchloridhaltige Lösung (14) vermischt (15) und einer dritten Stufe (17) mit einem Kreislauf (K2) zugeführt werden, in der unter Zufuhr von Wärme (20) HCl und Wasser ausgetrieben werden, und daß das Abgas (21) der dritten Stufe (17) einer Kondensation (22) zum Abscheiden von Wasser und danach einer Absorptionsstufe (24) zugeführt wird, in der unter Zufuhr von Wasser (25) die höher konzentrierte Produktsalzsäure (26) erzeugt wird, wobei Lösung (29) aus dem Kreislauf (K2) der dritten Stufe (17) in den Kreislauf (K1) der zweiten Stufe (4) zurückgeführt wird und dem Kreislauf (K1) der zweiten Stufe eine calziumhaltige wässrige Lösung (12) zugeführt und aus dem Kreislauf (K1) der zweiten Stufe (4) ein Teil (31) der Lösung entnommen wird

EP 0 504 622 A1

Die Erfindung betrifft ein Verfahren der im Oberbegriff des Anspruches 1 genannten Art.

Das Abgas einer Hausmüllverbrennungsanlage kann typischer Weise folgende Zusammensetzung aufweisen:

| $N_2$ | 78 Vol. % trocken |
|---|---|
| $CO_2$ | 11 Vol. % trocken |
| $O_2$ | 11 Vol. % trocken |
| HF | 20 mg/m$^3$ i. N. tr. |
| HCl | 1100 mg/m$^3$ i. N. tr. |
| $SO_x$ | 400 mg/m$^3$ i. N. tr. |
| $NO_x$ | 100-300 mg/m$^3$ i. N. tr. |

Hinzu kommen stark unterschiedliche Gehalte an Wasserdampf, sowie Flugstaub enthaltend Metalle, Schwermetalle, deren Salze und Oxide und organische Verbindungen.

HCl, HF und $SO_x$ können aus dem Abgas mittels einer Kalkmilchwäsche abgetrennt werden. Auf der DE-PS 31 08 444 ist ein Verfahren zum Aufbereiten von Calziumchlorid und andere Chloride enthaltenden Abwässern mit Schwefelsäure bekannt. Das Calziumchloridhaltige Abwasser wird in einer Eindampfstufe aufkonzentriert. Durch Zusatz von Schwefelsäure wird das eingespeiste Calziumchlorid zu Calziumsulfat und HCl umgesetzt. Wegen seiner geringen Wasserlöslichkeit kann das Calziumsulfat als Feststoff aus der wässrigen Lösung abgetrennt und ausgeschleust werden. Der Klarlauf wird einem HCl-Austreiber zugeleitet. Das HCl wird zusammen mit einem Teil des Wassers ausgetrieben und kann in hochkonzentrierte Salzsäure überführt werden. Bei diesem Verfahren erfolgt ein überstoechiometrischer Schwefelsäureverbrauch. Zusätzlich kommt als weiterer Nachteil hinzu, daß Calziumsulfat in wässriger Lösung ein Lösungsmaximum bei ca. 50° C aufweist. Beim Erwärmen im Verdampfer fällt Feststoff aus der gesättigten Lösung aus und es kann somit zur Verschmutzung der für die Durchführung des Verfahrens eingesetzten Apparatur kommen.

Die bei der Reinigung eines HCl-haltigen Abgases anfallende verdünnte Abfallsäure soll vorzugsweise zu einer wieder verwendbaren Salzsäure aufgearbeitet werden. Um eine marktfähige Salzsäure zu erreichen, sollte die Salzsäure auf einen Mindestgehalt von 30 Gew.-% angehoben werden. Ein wesentliches Problem ist hierbei die Aufkonzentrierung der verdünnten Säure über den azeotropen Punkt der Salzsäure hinaus, welcher bei Atmosphärendruck bei ca. 20 -21 Gew.-% HCl liegt. Die Zugabe von Schwefelsäure zur Überwindung der Azeotropie führt zu den bereits genannten Nachteilen.

Es ist daher die Aufgabe der vorliegenden Erfindung, ein Verfahren der vorstehend genannten Art anzugeben, bei dem auf einfache Weise und unter Austreibung von HCl aus flüssiger Phase die höher konzentrierte Säure hergestellt werden kann.

Diese Aufgabe wird dadurch gelöst, daß aus der Ausgangssäure in einer ersten Stufe durch Energiezufuhr Wasser ausgetrieben wird, daß in einer zweiten Stufe mit einem Kreislauf einer auf Siedetemperatur erwärmten wässrigen $CaCl_2$-Lösung Wasser und HCl ausgetrieben wird und der Abdampf der zweiten Stufe der ersten Stufe als Heizdampf zugeführt wird, daß aus der ersten Stufe abgezogene aufkonzentrierte Salzsäure und aus dem Kreislauf der zweiten Stufe abgezogene calziumchloridhaltige Lösung einer dritten Stufe mit einem Kreislauf zugeführt werden, in der unter Zufuhr von Wärme HCl und Wasser ausgetrieben werden, und daß das Abgas der dritten Stufe einer Kondensation zum Abscheiden von Wasser und danach einer Absorptionsstufe zugeführt wird, in der unter Zufuhr von Wasser die höher konzentrierte Produktsalzsäure erzeugt wird, wobei Lösung aus dem Kreislauf der dritten Stufe in den Kreislauf der zweiten Stufe zurückgeführt wird und dem Kreislauf der zweiten Stufe eine calziumhaltige wässrige Lösung zugeführt und aus dem Kreislauf der zweiten Stufe ein Teil der Lösung entnommen wird.

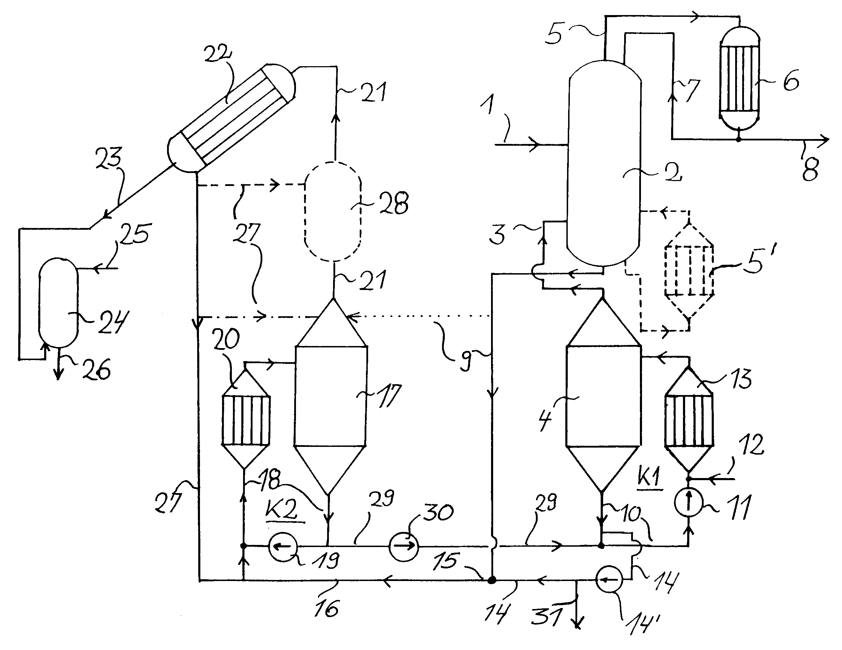

Die Erfindung stützt sich auf die Gleichgewichtsverhältnisse im System HCl-$CaCl_2$-$H_2O$, wie es z. B. in Abbildung 3 des Aufsatzes von J. Synowiec und W. Bobrownicki in der Pl-Z Chemia Stosowana (1964), S. 383-403 und später in Abbildung 3 des Aufsatzes "Aufarbeitung von Abfallsäure" von E. Schmoll in der DE-Z CAV (1987), S. 23-24 beschrieben ist, wobei allerdings die in der Beschreibungseinleitung aufgeführten Nachteile vermieden werden sollen.

Enthält zum Beispiel eine 45 Gew.-%ige wässrige Calziumchloridlösung ca. 2,5 Gew.-% HCl, so beträgt die HCl-Konzentration im Gas oberhalb dieser Lösung mindestens 42 Gew.-%. Wird das Gas mit einer solchen Konzentration einer Kondensationsstufe zugeführt, so wird ein wesentlicher Teil des in dem Gas enthaltenen Wasserdampfes und ein Teil des HCl-Gases auskondensieren, so daß am Ende der Kondensationsstufe ein Gas mit einem HCl-Gehalt von z.B. 90 Gew.-% ansteht. Aus diesem Gas läßt sich mittels der bekannten Absorptionsverfahren mit Wasser eine höher konzentrierte Salzsäure erzeugen, vorzugsweise eine Salzsäure von mind. 30 Gew.-%. Nach der Aufkonzentration der Ausgangssaure von zum Beispiel 1-10 Gew.-% auf einen Konzentrationswert bis maximal zu der azeotropen Konzentration in der ersten Stufe läßt sich in der zweiten Stufe mit einer höherkonzentrigen Calziumchloridlösung die Azeotropie von HCl überwinden. Diese Stufe kann in besonders vorteilhafter Weise ohne Füllkörper oder sonstige teure Kolonnenausrüstungen betrieben werden.

Um die aus dem Kreislauf der zweiten Stufe abzuziehende und Feststoffverunreinigungen enthaltende Flüssigkeitsmenge so gering wie möglich zu halten, kann die Feststoffkonzentration der calziumchloridhaltigen Lösung auf einem hohen Niveau gehalten werden. Da die Calziumchloridlösung auch zwangsläufig Anteile von HCl enthält, kann auf diese Weise der HCl-Verlust infolge der Abschlämmung verringert werden.

Die Unteransprüche betreffen vorteilhafte Ausgestaltungen des erfindungsgemäßen Verfahrens.

Verschiedene Ausführunfsformen des erfindungsgemäße Verfahrens sollen nun anhand des beigefügten Verfahrensschemas näher erläutert werden.

Die Ausgangssäure mit einer Konzentration von z.B. 1-10 Gew.-% wird bei 1 eine Rektifikationskolonne 2 zugeführt. Die Ausgangssäure ist mit Feststoffen verunreinigt. Die Rektifikationskolonne 2 wird mit bei 3 herangeführtem Dampf beheizt, der am Kopf eines Verdampfers 4 abgezogen wird und Wasserdampf und gasförmiges HCl enthält. Falls der Wärmeinhalt des Heizdampfes 3 nicht ausreichend ist, kann der Rektifikationskolonne 2 eine weitere Wärmequelle, wie zum Beispiel die in der Figur gestrichelt dargestellte außenliegende Heizkammer 5' zugeordnet werden. Am Kopf der Rektifikationskolonne wird über Leitung 5 Wasserdampf abgezogen, der über einen Kondensator 6 geführt wird. Ein Teil des Kondensats wird über Leitung 7 zur Rektifikationskolonne zurückgeführt, während der andere Teil als Brüdenkondensat über Leitung 8 abgezogen wird.

Am Fuß der Kolonne 2 wird über Leitung 9 aufkonzentrierte Salzsäure abgezogen. In der Rektifikationskolonne kann eine Aufkonzentration maximal bis zur Azeotrop-Konzentration erreicht werden.

Dem Verdampfer 4 ist ein Kreislauf K1 bestehend aus Kreislaufleitung 10, Umwälzpumpe 11 und außenliegender Heizkammer 13 zugeordnet. Dem Kreislauf wird über Leitung 12 eine calciumhaltige wässrige Lösung zugeführt, zum Beispiel $CaCl_2$-$H_2O$ oder $Ca(OH)_2$ -$H_2O$.

Über eine Leitung 14 wird aus dem Kreislauf K1 mit Hilfe einer Pumpe 14' calciumchloridhaltige Lösung abgezogen und mit der über Leitung 9 herangeführten aufkonzentrierten Salzsäure bei 15 vermischt. Hier kann eine gesonderte Mischeinrichtung vorgesehen sein. Das Gemisch wird über eine Leitung 16 dem Kreislauf K2 eines weiteren Verdampfers 17 zugeleitet. Es wäre auch möglich, die über Leitung 9 herangeführte Salzsäure direkt dem Verdampfer zuzuführen, wie dies durch den gepunkteten Verlauf der Leitung 9 in der Figur dargestellt ist. Der Kreislauf K2 besteht aus der Kreislaufleitung 18, einer Umwälzpumpe 19 und einer außenliegenden Heizkammer 20. Bei der in der Figur gezeigten Verfahrensführung mündet die Leitung 16 zwischen Umwälzpumpe 19 und außenliegender Heizkammer 20. Am Kopf des Verdampfers 17 wird über eine Leitung 21 ein Wasserdampf-HCl-Gasgemisch abgezogen, das eine höhere HCl-Konzentration als die Azeotropkonzentration aufweist. Dieses Gas wird einem Rücklaufkondensator 22 zugeführt. Das Ausgangsgas des Rücklaufkondensators wird über Leitung 23 abgeführt und kann eine Konzentration von ca. 90 Gew.-% HCl aufweisen. Das Gas wird einer in der Figur schematisch dargestellten Absorptionsstufe 24 zugeleitet, der - wie bei 25 angedeutet - Wasser im Gegenstrom zugeführt wird. Auf diese Weise kann bei 26 eine Produktsalzsäure von mind. 30 Gew.-% abgezogen werden. Da mit der Wasserdampfkondensation im Rücklaufkondensator 22 auch HCl auskondensiert wird, steht am Rücklaufkondensator eine konzentrierte Salzsäure, zum Beispiel mit einer Konzentration von 30-40 Gew.-% an. Diese wird über eine Rücklaufleitung 27 der Leitung 16 oder der Kreislaufleitung 18 zugeleitet. Wie in der Figur durch die strichpunktierte Linie angedeutet, kann die Rückführleitung 27 auch direkt zum Verdampfer 17 geführt werden. Die HCl-Konzentration ist von der Kühlmediumtemperatur im Rücklaufkondensator abhängig.

In der Heizkammer 20 wird mindestens soviel Wärme zugeführt, daß am Kopf des Verdampfers 17 die angestrebte hohe HCl-Konzentration von zum Beispiel 42 Gew.-% erreicht wird und daß es zumindest in der Heizkammer nicht zu einem Ausfällen von $CaCl_2$ kommt.

Es kann unter Umständen sinnvoll sein, in die Leitung 21 eine sogenannte Verstärkungskolonne 28 einzuschalten. In diesem Falle würde die Leitung 27 - wie dies in der Figur gestrichelt dargestellt ist - zu der Verstärkungskolonne 28 geführt werden.

Um die über die Leitungen 14,16 aus dem Kreislauf K1 in den Kreislauf K2 überführte $CaCl_2$-haltige wässrige Lösung in den Kreislauf K1 zurückzuführen, sind die beiden Kreisläufe K1 und K2 über eine Leitung 29 mit einer Pumpe 30 miteinander verbunden, derart, daß die von K2 herangeführte $CaCl_2$-Lösung vor Einführung in den Verdampfer 4 in der Heizkammer 13 erneut auf Siedetemperatur der $CaCl_2$-Lösung bei dem im Verdampfer herrschenden Druck erwärmt wird. Die auf Leitung 29 geführte wässrige Lösung

EP 0 504 622 A1

enthält nicht nur $CaCl_2$, sondern auch einen Restgehalt an HCl. Auch der aus dem Verdampfer 4 in die Rektifikationskolonne 2 überführte Heizdampf enthält neben Wasser noch HCl.

Um die mit der Ausgangssäure evtl. eingetragenen Feststoffe abschlämmen zu können, wird wie bei 31 gezeigt, ein Teil der Lösung aus dem Kreislauf 30, 29, 14, 16 oder aus K1 abgezogen. Der Dampf in Leitung 21 weist eine größere HCl-Konzentration als die azeotrope Konzentration auf, während der Dampf in Leitung 3 weniger HCl als die azeotrope Konzentration enthält.

Für bevorzugte HCl- und $CaCl_2$-Konzentrationen in Gew.-% im System sollen in der folgenden Tabelle Werte angegeben werden, wobei die eingeklammerten Werte weiter bevorzugte Wertebereiche angeben.

Tabelle

| Leitung | 3 | 9 | 10 | 21 | 29 |
|---|---|---|---|---|---|
| HCl | 5-20 (8-15) | 5-22 (14-19) | 0,1-1,5 (0,2-0,7) | 30-65 (35-50) | 0,2-9 (2-6) |
| $CaCl_2$ | - | - | 40-65 (48-54) | - | 25-55 (30-45) |

In der Leitung 3 und 21 wird ein Gasgemisch und in den Leitungen 9, 10 und 29 werden Lösungen, die noch $H_2O$, Flugstaub und Schwermetalle enthalten gebildet.

(Hierzu 1 Blatt Zeichnungen)

**Patentansprüche**

1. Verfahren zur Herstellung einer höher konzentrierten Salzsäure aus einer Salzsäure mit einer unterhalb der azeotropen Konzentration liegenden Konzentration, insbesondere aus der Waschflüssigkeit einer Wäsche eines zumindest HCl-haltigen Abgases, insbesondere des Abgases einer Müllverbrennungsanlage,

   **dadurch gekennzeichnet,**

   daß aus der Ausgangssäure (1) in einer ersten Stufe (2) durch Energiezufuhr (3;5) Wasser (5) ausgetrieben wird, daß in einer zweiten Stufe (4) mit einem Kreislauf (K1) einer auf Siedetemperatur erwärmten wässrigen $CaCl_2$-Lösung Wasser und HCl ausgetrieben wird und der Abdampf (3) der zweiten Stufe (4) der ersten Stufe als Heizdampf zugeführt wird, daß aus der ersten Stufe (2) abgezogene aufkonzentrierte Salzsäure (9) und aus dem Kreislauf (K1) der zweiten Stufe (4) abgezogene calciumchloridhaltige Lösung (14) vermischt (15) und einer dritten Stufe (17) mit einem Kreislauf (K2) zugeführt werden, in der unter Zufuhr von Wärme (20) HCl und Wasser ausgetrieben werden, und daß das Abgas (21) der dritten Stufe (17) einer Kondensation (22) zum Abscheiden von Wasser und danach einer Absorptionsstufe (24) zugeführt wird, in der unter Zufuhr von Wasser (25) die höher konzentrierte Produktsalzsäure (26) erzeugt wird, wobei Lösung (29) aus dem Kreislauf (K2) der dritten Stufe (17) in den Kreislauf (K1) der zweiten Stufe (4) zurückgeführt wird und dem Kreislauf (K1) der zweiten Stufe eine calziumhaltige wässrige Lösung (12) zugeführt und aus dem Kreislauf (K1) der zweiten Stufe (4) ein Teil (31) der Lösung entnommen wird.

2. Verfahren nach Anspruch 1,

   **dadurch gekennzeichnet,**

   daß die Ausgangssäure (1) in der ersten Stufe (2) maximal auf die azeotrope Konzentration aufkonzentriert wird.

3. Verfahren nach Anspruch 1 oder 2,

   **dadurch gekennzeichnet,**

   daß die aus der ersten Stufd (2) abgezogene Salzssäure (9) und die aus dem Kreislauf (K1) der zweiten Stufe abgezogene Lösung (14) vor der Zufuhr zur dritten Stufe (17) miteinander vermischt werden.

4. Verfahren nach mindestens einem der Ansprüche 1-3,

   **dadurch gekennzeichnet,**

   daß der Ausgangssäure (1) in der ersten Stufe (2) zusätzlich zu Abdampf der zweiten Stufe (2) noch weitere Wärme (5') zugeführt wird.

5

**5.** Verfahren nach mindestens einem der Ansprüche 1-4,
**dadurch gekennzeichnet,**
daß die Lösung des Kreislaufs (K2) der dritten Stufe (17) mindestens auf eine ein Ausfällen von $CaCl_2$ vermeidende Temperatur erwärmt wird.

**6.** Verfahren nach mindestens einem der Ansprüche 1-5,
**dadurch gekennzeichnet,**
daß zwischen der dritten Stufe (17) und der Kondensation (22) eine Verstärkungsstufe (Verstärkungskolonne) (28) eingeschaltet wird.

**7.** Verfahren nach mindestens einem der Ansprüche 1-6,
**dadurch gekennzeichnet,**
daß das Kondensat (27) der der dritten Stufe (17) nachgeschalteten Kondensation (22) in den Kreislauf (K2) der dritten Stufe (17) zurückgeführt wird.

**8.** Verfahren nach mindestens einem der Ansprüche 1-7,
**dadurch gekennzeichnet,**
daß das Kondensat (27) der der dritten Stufe (17) nachgeschalteten Kondensationsstufe (22) der Verstärkungsstufe (28) zugeführt wird.

**9.** Verfahren nach mindestens einem der Ansprüche 1-8,
**dadurch gekennzeichnet,**
daß der Abdampf (3) der zweiten Stufe (4) weniger HCl als der Azeotropie entsprechend und der Abdampf (21) der dritten Stufe (17) mehr HCl als der Azeotropie entsprechend enthält.

**10.** Verfahren nach mindestens einem der Ansprüche 1-9,
**dadurch gekennzeichnet,**
daß die zweite und/oder dritte Stufe (4;17) ohne Füllkörper oder sonstige Kolonneneinbauten betrieben werden.

**11.** Verfahren nach mindestens einem der Ansprüche 1-10,
**dadurch gekennzeichnet,**
daß in allen Stufen bei Atmosphärendruck oder darunter gearbeitet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DD-A-238 604 (VEB KOMBINAT KALI) <br> * Anspruch 1 * <br><br> --- | 1 | C01B7/07 |
| A | DD-A-256 502 (VEB KOMBINAT KALI) <br> * Anspruch 1 * <br><br> --- | 1 | |
| A | FR-A-2 036 388 (COMPAGNIE FRANCAISE DE RAFFINAGE ) <br> * Anspruch 1 * <br><br> --- | 1 | |
| A | US-A-3 779 870 (GUDMUNSEN ET AL) <br> * Anspruch 1 * <br><br> --- | 1 | |
| A | DE-A-2 210 857 (IMI (TAMI) INSTITUT FOR RESEARCH AND DEVELOPMENT) <br> * Ansprüche 1-6 * <br><br> ----- | 1 | |

| RECHERCHIERTE SACHGEBIETE (Int. Cl.5) |
|---|
| C01B |

Der vorliegende Recherchenbericht wurde für alle Patentansprüche erstellt

| Recherchenort | Abschlußdatum der Recherche | Prüfer |
|---|---|---|
| BERLIN | 30 JUNI 1992 | CLEMENT J-P. |